# EUROPÄISCHE PATENTSCHRIFT

(11) **EP 2 108 625 B1**
(45) Veröffentlichungstag und Bekanntmachung des Hinweises auf die Patenterteilung: **27.03.2013**
(21) Anmeldenummer: 09005067.5
(22) Anmeldetag: 06.04.2009
(51) Int. Cl.: C03C 23/00, C03B 23/00, B29C 59/16, B44C 3/04, B44C 5/00, B44C 3/08, B41M 5/26

(54) **Verfahren zum Erzeugen von erhabenen bzw. eingezogenen Strukturen an Hohlkörpern vorzugsweise aus Glas**
Method for generating embossed/retracted structures on hollow ware, preferably made of glass
Procédé de production de structures élevées ou insérées sur des corps creux, de préférence en verre

(30) Priorität: 09.04.2008 DE 102008018042; 26.09.2008 DE 102008048907
(43) Veröffentlichungstag der Anmeldung: 14.10.2009
(73) Patentinhaber: Zwiesel Kristallglas AG, 94227 Zwiesel (DE)
(72) Erfinder: Lesche, Klaus, 94259 Kirchberg im Wald (DE)
(74) Vertreter: Müller-Boré & Partner Patentanwälte

(56) Entgegenhaltungen:
- US-A- 3 322 524
- US-A- 3 573 891
- DATABASE WPI Week 198233 Thomson Scientific, London, GB; AN 1982-69300E XP002535402 -& JP 57 111250 A (TOKYO SHIBAURA ELECTRIC CO) 10. Juli 1982 (1982-07-10)
- GARY J. CHENGA, DANIEL PIRZADA, ZHOU MING: "Microstructure and mechanical property characterizations of metal foil after microscale laser dynamic forming", JOURNAL OF APPLIED PHYSICS, vol. 101, 063108, 2007, XP012098003, DOI: 10.1063/1.2710334
- A. J. B. Robertson, D. J. Fabian, A. J. Crocker, J. DeWing: "Laboratory glass-working for scientists", 1957, Butterworths Scientific Publications, London, XP007920341, * page 72; figure 27 III *
- F. VOLLERTSEN: "Applications of Lasers for Flexible Shaping Processes" In: M. Geiger: "Schlüsseltechnologie Laser: Herausforderungen an die Fabrik 2000, Proceedings of the 12th International Congress (LASER'95)", 1995, XP008149592, pages 151-162, * figures 1, 11 *

## Beschreibung

Die vorliegende Erfindung betrifft ein Verfahren zum Erzeugen von erhabenen bzw. eingezogenen Strukturen an Werkstücken sowie eine korrespondierende Vorrichtung.

Verschiedene Produkte bzw. Werkstücke wie beispielsweise Glasprodukte werden beim Erzeugen teilweise mit Vorsprüngen, Absätzen, Erhebungen etc. (erhabene Strukturen) und/oder Vertiefungen, Mulden, Nuten etc. (eingezogene Strukturen) versehen. Dabei werden diese erhabenen und eingezogenen Strukturen gleichzeitig mit der Herstellung des Produkts bzw. Werkstücks bzw. Glaskörpers erzeugt, indem beispielsweise ein Glasposten in eine metallisch blanke Form eingeblasen wird, welche die gewünschte Struktur hat (Festblasen). Die Qualität, d.h. Abmessungen, Rauigkeit etc. der so erzeugten erhabenen und eingezogenen Strukturen ist jedoch relativ niedrig. Das so erzeugte Glasprodukt erweckt beim Anwender den Eindruck einer billigen bzw. niedrigen Qualität. Es besteht somit ein Bedarf für eine Verbesserung der erhabenen bzw. eingezogenen Strukturen bezüglich deren Qualität.

US 3 322 524 offenbart ein Verfahren und eine Vorrichtung für die Herstellung von abgedichteten Schaltern der Art mit einem dielektrischen Gehäuse, das Vorsprünge oder Vertiefungen aufweist, um in dem Gehäuse abgedichtete magnetische Elemente oder sogenannte Reed-Kontakte zu greifen.

JP 5 711 250 beschreibt ein Gerät zum Formen einer Glasröhre, das Spannfutter zum drehenden Einspannen der Glasröhre umfasst, um durch Bestrahlen der drehenden Glasröhre und gleichzeitigem Aufbringen von Druck die Glasröhre zu verformen.

US 3 573 891 offenbart ein Verfahren zum Ausbilden einer Thermometereinschnürung und ein entsprechendes Gerät. Dabei wird eine Blase in eine Bohrung eines Thermometers eingeschlossen und zum Kollabieren gebracht, um die Einschnürung zu bilden.

Die Aufgabe der Erfindung besteht somit in der Schaffung eines Verfahrens zum Erzeugen von erhabenen und eingezogenen Strukturen, mit denen qualitativ hochwertige Produkte bzw. Werkstücke erzeugt werden können. Darüber hinaus soll eine korrespondierende Vorrichtung zur Verfügung gestellt werden.

Diese Aufgabe wird durch die Merkmale der unabhängigen Ansprüche gelöst. Vorteilhafte Weiterbildungen der Erfindung sind in den abhängigen Ansprüchen definiert.

Diese Aufgabe wird gelöst durch ein Verfahren zum Erzeugen von erhabenen und/oder eingezogenen Strukturen an Werkstücken bzw. Produkten bzw. Wandungen hiervon oder Lumen mit den Schritten:
Aufbringen einer Druckdifferenz zwischen einer Seite einer Wandung (des Werkstücks) und einer anderen im wesentlichen dazu entgegengesetzten Innen- und einer Außenseite einer Wandung bzw. dem Innern des Hohlkörpers und dem Äußeren des Hohlkörpers;
lokales Erwärmen der Wandung des Werkstücks auf eine Erweichungstemperatur des (Materials des) Werkstücks mittels Laserstrahl als Wärmequelle, um eine lokale Verformung der Wandung des Werkstücks zu verursachen;
Abkühlen des Werkstücks;
Anordnen eines Hohlkörpers an der einen und/oder der anderen Seite des Werkstücks und Abdichten des Hohlkörpers daran und/oder Verschließen einer Öffnung eines Hohlkörpers des Werkstücks mittels einer Platte;
Abfahren einer vorgegebenen oder vorgebbaren oder gewünschten Bahn mit dem Laserstrahl, um Linien, Erhebungen, Vertiefungen, Mulden und/oder Rillen wie gewünscht an der Wandung des Werkstücks auszubilden; und
Steuern eines Verformungsgrads durch Steuern der Druckdifferenz der einen Seite und der entgegengesetzten Seite der Wandung des Werkstücks und/oder Steuern der Erwärmungstemperatur des Werkstücks.

Das erfindungsgemäße Verfahren stellt einen hohen Freiheitsgrad zur Verfügung, weil aufgrund der lediglich lokalen Erwärmung des Werkstücks und/oder der Wandung beliebige Strukturen geformt bzw. gestaltet werden können. Ein Verformungsgrad kann darüber hinaus durch Aufbringen einer entsprechenden Druckdifferenz bestimmt bzw. gesteuert werden. In anderen Worten kann ein hoher Verformungsgrad durch eine hohe Druckdifferenz erzeugt werden, während ein niedriger Verformungsgrad durch eine niedrige Druckdifferenz erzeugt werden kann. Alternativ oder zusätzlich kann durch Steuern der Erwärmungstemperatur des Werkstücks der Verformungsgrad gesteuert werden. Das heißt, durch Erzeugen einer verhältnismäßig niedrigen Temperatur kann der Verformungsgrad verringert werden, während durch Erzeugen einer höheren Erwärmungstemperatur ein Verformungsgrad erhöht werden kann.

Beispielsweise kann ein Hohlkörper (Kelch) eines bereits geblasenen bzw. gepreßten Glasprodukts lediglich lokal erwärmt werden, um eine lokale Verformung zu verursachen. Derart kann die erhabene bzw. eingezogene Struktur nachträglich an einem bereits gepreßten bzw. geblasenen Glasprodukt erzeugt werden.

Zusammenfassend kann gesagt werden, daß ein Verformungsgrad einerseits durch Steuern der Druckdifferenz und andererseits durch Steuern der lokalen Erwärmungstemperatur bestimmt werden kann. Das Abkühlen kann passiv durch Aussetzen des Produkts der Umgebungstemperatur oder aktiv durch Abkühlungsmittel erfolgen.

Vorzugsweise wird die Druckdifferenz an der zu bearbeitenden bzw. zu verformenden Wandung dadurch aufgebracht, daß ein Hohlkörper wie eine Wanne oder Schale oder Tasse an einer und/oder der anderen Seite der Wandung angesetzt bzw. positioniert wird und innerhalb des Hohlkörpers ein Unterdruck oder eine Überdruck erzeugt wird. Weiter bevorzugt wird der Hohlkörper beispielsweise mittels einer Dichtung an der Wandung abgedichtet, um den Unter-/Überdruck länger halten zu können.

Vorzugsweise wird der Schritt des Erwärmens mittels eines CO₂-Lasers durchgeführt. Eine Lasereinrichtung bietet den Vorteil, daß die Energie zum Erwärmen sehr stark gebündelt werden kann, um sehr präzise und gezielt bestimmte Bereiche an dem Werkstück einer starken Erwärmung auszusetzen. Somit können auch sehr fein strukturierte Gebilde an dem Produkt erzeugt werden.

Um bestimmte Erhebungs- bzw. Vertiefungszüge an dem Werkstück zu erzeugen, wird die Wärmequelle entlang einer vorbestimmten Bahn an dem Werkstück bewegt. Hierdurch hat der Anwender eine weitere Möglichkeit zum Steuern der Energieeinbringung in bestimmte lokale Bereiche des Werkstücks. Derart können qualitativ hochwertige und sehr gut reproduzierbare Strukturen an dem Werkstück erzeugt werden.

Vorzugsweise wird die Wärmequellenleistung und/oder die Bahngeschwindigkeit der Wärmequelle mittels einer entsprechenden Steuer- oder Regelvorrichtung gesteuert bzw. geregelt. Somit gibt es eine weitere Möglichkeit zum Steuern bzw. Gestalten der erzeugbaren Strukturen an dem Werkstück.

Des weiteren wird vorzugsweise die Lage und/oder Kontur des Werkstücks mittels einer optischen Erfassungseinrichtung wie beispielsweise einer 2D-Scanneroptik oder einer 3D-Scanneroptik oder einer beliebigen anderen optischen Erfassungseinrichtung wie beispielsweise einer Lichtschranke, einem optischen Sensor, einer CCD-Kamera oder dergleichen erfaßt. Derart kann die vorbestimmte Bahn der Wärmequelle auf der Grundlage der erfaßten Lage und/oder Kontur des Werkstücks berechnet und abgefahren werden, um somit die gewünschten erhabenen bzw. eingezogenen Strukturen an vorbestimmten Stellen an dem Werkstück mit vorbestimmten Höhen und/oder Tiefen zu erzeugen.

Vorzugsweise wird mit Hilfe derselben optischen Erfassungseinrichtung oder einer separaten optischen Erfassungseinrichtung die Wandstärke der Wandung des Werkstücks vermessen und die Bahngeschwindigkeit und Wärmequellenleistung auf der Grundlage der gemessenen Wandstärke korrigiert. Dadurch kann die Formgebung der erhabenen bzw. eingezogenen Strukturen sowie des gesamten fertigen Werkstücks weiter verbessert werden, weil die Abweichungen der Wandstärke des zu bearbeitenden Werkstücks berücksichtigt werden. In Bereichen mit dünnerer Wandstärke ist eine geringere Wärmequellenleistung notwendig und/oder die Bahngeschwindigkeit kann eventuell erhöht werden, um eine vorbestimmte Erhebung oder Vertiefung an dem Werkstück zu erzeugen. Umgekehrt ist bei Bereichen mit erhöhter Wandstärke eine höhere Wärmequellenleistung oder eventuell eine geringere Bahngeschwindigkeit oder beides erforderlich, um eine vorbestimmte Struktur an dem Werkstück zu erzeugen. Durch Messen der Wandstärke und entsprechendes Korrigieren von Bahngeschwindigkeit und/oder Wärmequellenleistung kann demgemäß die Struktur mit höherer Präzision erzeugt werden, um einen qualitativ hochwertigen Eindruck zu vermitteln.

Vorzugsweise wird auch der Umformgrad des Werkstücks mit derselben oder einer anderen optischen Meßeinrichtung kontinuierlich während der Umformung gemessen, um eine weitere Korrekturmöglichkeit zum Korrigieren von Bahngeschwindigkeit und/oder Wärmeleistung zu schaffen. Dies bietet den Vorteil, daß ein vorbestimmter Umformgrad unmittelbar gemessen wird und ein entsprechender Eingriff auf die Steuerung bzw. Regelung erfolgen kann, um Bahngeschwindigkeit und/oder Wärmequellenleistung so zu steuern bzw. zu regeln, daß der vorbestimmte Umformgrad erzielt wird.

Zusätzlich kann das Werkstück durch Aufbringen eines Gasstroms gezielt abgekühlt werden, um eine vorgegebene Verfestigung der erzeugten Strukturen zu veranlassen. Als Gas wird dabei vorzugsweise Stickstoff oder Luft verwendet.

Wenn das Werkstück einen Hohlkörper aufweist, wie beispielsweise einen Kelch, wird zum Aufbringen der Druckdifferenz eine Öffnung des Hohlkörpers verschlossen, beispielsweise mit einer silikonbeschichteten Aluminiumplatte. Es kann jedoch auch jede andere Platte oder Verschlußeinrichtung verwendet werden, solange der Innenraum des Hohlkörpers ausreichend gegenüber einer Außenseite abgedichtet wird, um eine gewünschte Druckdifferenz zwischen dem Inneren und Äußeren des Hohlkörpers aufzubringen. Die silikonbeschichtete Aluminiumplatte bietet dabei den Vorteil einer guten Abdichtung und einer guten Wärmeableitung ohne beim Einbringen der Wärme verformt zu werden.

Vorzugsweise wird mit dem erfindungsgemäßen Verfahren ein Kelch eines Trinkglases als Hohlkörper mit den erhabenen bzw. eingezogenen Strukturen versehen. Es versteht sich jedoch, daß jedes andere Glasprodukt mit dem erfindungsgemäßen Verfahren mit derartigen Strukturen versehen werden kann. Das erfindungsgemäße Verfahren ist des weiteren nicht auf die Bearbeitung von Glas beschränkt, sondern kann auch bei anderen Werkstoffen wie beispielsweise Blech oder Kunststoff zum Einsatz kommen.

Die Erfindung betrifft des weiteren eine Vorrichtung zum Durchführen des vorstehend beschriebenen Verfahrens mit einer Druckdifferenzerzeugungseinrichtung und einem Laser zum Erzeugen eines Laserstrahls als Wärmequelle;
einem Hohlkörper oder einer Platte zum Erzeugen eines geschlossenen Hohlraums an dem Werkstück;
einer Bewegungseinrichtung zum Bewegen des Lasers entlang einer Oberfläche des Hohlkörpers; und
eine Steuereinrichtung zum Steuern eines Verformungsgrads durch Steuern der Druckdifferenz der einen Seite und der entgegengesetzten Seite der Wandung des Werkstücks und/oder Steuern der Erwärmungstemperatur des Werkstücks.

Vorzugsweise wird ein CO₂-Laser verwendet, so daß die eingebrachte Wärmeenergie sehr stark gebündelt und sehr präzise gezielt an vorgegebene Stellen eingebracht werden kann.

Erfindungsgemäß hat die Vorrichtung des weiteren eine Bewegungseinrichtung zum Bewegen der Wärmequelle entlang einer Oberfläche des Werkstücks.

Weiter bevorzugt ist des weiteren eine Steuer- und Regeleinrichtung zum Steuern oder Regeln der Wärmequellenleistung und/oder der Bahngeschwindigkeit der Wärmequelle vorgesehen.

Noch weiter bevorzugt ist des weiteren eine optischen Erfassungseinrichtung zum Erfassen der Lage und/oder Kontur des Werkstücks und eine Berechnungseinrichtung zum Berechnen der vorbestimmten Bahn der Wärmequelle auf der Grundlage der erfaßten Lage und/oder Kontur des Werkstücks vorgesehen.

Weiter bevorzugt sind des weiteren eine Meßeinrichtung zum kontinuierlichen Messen der Wandstärke der Wandung des Werkstücks und eine Korrektureinrichtung zum Korrigieren der Bahngeschwindigkeit und/oder der Wärmequellenleistung auf der Grundlage der gemessenen Wandstärke angeordnet.

Vorzugsweise sind des weiteren eine Meßeinrichtung zum kontinuierlichen Messen eines Umformgrads des Werkstücksund eine Korrektureinrichtung zum Korrigieren der Bahngeschwindigkeit und/oder der Wärmequellenleistung auf der Grundlage des gemessenen Umformgrads vorgesehen.

Weiter bevorzugt ist des weiteren eine Gaszufuhreinrichtung zum Abkühlen des Werkstücks mittels Aufbringen eines Gasstroms vorgesehen.

Die Erfindung wird nun anhand der beigefügten Figur näher erläutert.
Fig. 1 zeigt eine ebene Platte als ein Werkstück, an dem erhabene bzw. eingezogene Strukturen erzeugt werden sollen.

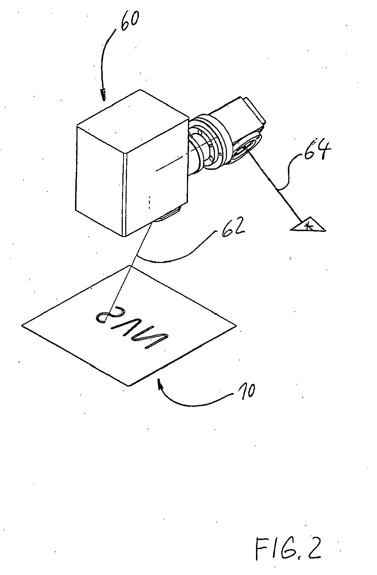

Fig. 2 zeigt eine Laservorrichtung als bevorzugte Wärmequelle zum Erweichen einer Wandung des Werkstücks.
Fig. 3 zeigt ein Weinglas als beispielhaften Hohlkörper, der mit dem erfindungsgemäßen Verfahren mit entsprechenden erhabenen und/oder eingezogenen Strukturen versehen werden soll.

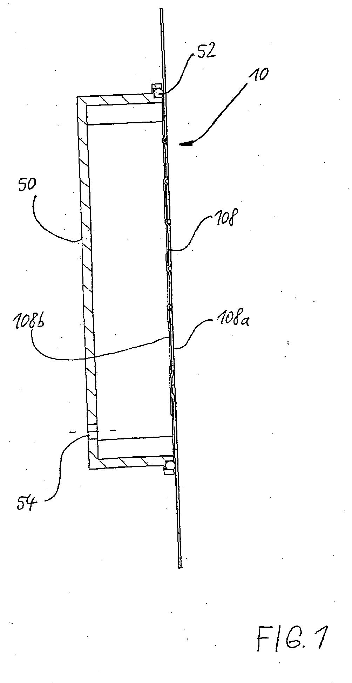

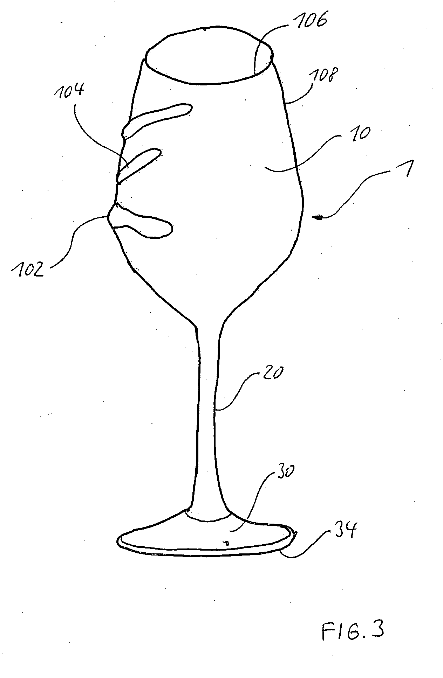

Die in Fig. 1 gezeigte im wesentlichen ebene Platte soll ein beispielhaftes Werkstück 10 sein, an dem die erhabenen oder eingezogenen Strukturen erzeugt werden. diese Platte kann aus Glas, Kunststoff oder Blech bestehen. Es kann jedoch auch ein anderes Werkstück 10 verformt werden, das eine im wesentlichen ebene Wandung 108 aufweist. Darüber hinaus kann der Kelch 10 des Trinkglases 1 von Fig. 3 als zu bearbeitendes Werkstück dienen.

Hierzu wird die Wandung 108 des Werkstücks 10 an eine Öffnung eines Hohlkörpers 50 bzw. einer Wanne bzw. Tasse angelegt und dort vorzugsweise mittels einer Dichtung 52 abgedichtet. Diese Dichtung 52 kann beispielsweise als ein O-Ring mit kreisförmigem Querschnitt ausgebildet sein und weist vorzugsweise Silikon, Gummi, Aluminium, Kupfer oder dergleichen auf.

Danach wird im Inneren des Hohlkörpers 50 ein Über- oder Unterdruck erzeugt, indem eine Vakuumpumpe und/oder eine Druckbeaufschlagungsvorrichtung (nicht gezeigt) an das Innere des Hohlkörpers 50 mittels des Unter- bzw. Überdrucksanschlußes 54 angeschlossen wird.

Das in Figur 3 gezeigte Trinkglas 1 zeigt ein weiteres Beispiel eines zu bearbeitenden Werkstücks und hat einen Boden 30, einen Stiel 20 und einen Kelch 10.

Derart wird ein Differenzdruck zwischen den entgegengesetzten Seiten 108a, 108b der Wandung 108 (siehe Fig. 1) bzw. zwischen dem Innenraum des Kelchs 10 und dem Äußeren des Kelchs 10 (siehe Fig. 3) erzeugt. Durch lokales Erwärmen der Wandung 108 des Werkstücks 10 wird die Wandung 108 lokal bis zur Erweichungstemperatur des Werkstücks 10 erwärmt. Durch die aufgebrachte Druckdifferenz wird bei Überdruck im Inneren des Hohlkörpers 50 eine erhabene oder vorspringende Struktur an der Wandung 108 erzeugt. Im umgekehrten Fall wird bei Unterdruck in dem Inneren des Hohlkörpers 50 eine eingezogene Struktur (Vertiefung, Nut etc.) an der Wandung 108 des Werkstücks 10 erzeugt. Nach dem Abkühlen der an der Wandung 108 lokal erwärmten Stellen werden diese Stellen in der verformten Gestalt erhärtet. Derart verbleibt eine permanente Verformung an der Wandung 108 des Werkstücks 10.

Als Wärmequelle wird vorzugsweise eine (nicht gezeigte) Lasereinrichtung wie beispielsweise ein CO₂-Laser verwendet, weil derart die eingebrachte Energie zum Erwärmen des Werkstücks sehr stark gebündelt werden kann und sehr feine und qualitativ hochwertige Strukturen an der Wandung 108 des Werkstücks 10 erzeugt werden können. Vorzugsweise ist ein 2-D Scanner 60 angeordnet, der einen Rohlaserstrahl 64 als Laserstrahl 62 auf eine vorgegebene oder vorgebbare bzw. gewünschte Bahn ablenken. Alternativ oder zusätzlich ist die Lasereinrichtung mit einer (nicht gezeigten) Bewegungseinrichtung gekoppelt, um den Laserstrahl 62 entlang einer vorgegebenen bzw. vorgebbaren bzw. gewünschten Bahn an der Wandung 108 des Werkstücks 10 zu bewegen. Derart können Linien, Erhebungen, Vertiefungen, Mulden, Rillen, Muster etc. wie gewünscht an der Wandung 108 ausgebildet werden. Die Differenzdruckerzeugungseinrichtung ist vorzugsweise steuer- bzw. regelbar zwischen einem Unterdruck von 0,02 bar bis zu einem Überdruck von 2 bar, am besten zwischen einem Unterdruck von 0,02 bar bis zu einem Überdruck von 5 bar.

Weiter bevorzugt ist sowohl die Lasereinrichtung als auch die Bewegungseinrichtung mit einer (nicht gezeigten) zentralen Steuer- und Regeleinrichtung gekoppelt, um die Wärmequellenleistung und die Bahngeschwindigkeit entsprechend dem vorgegebenen Muster bzw. der Soll-Struktur steuern bzw. regeln zu können.

Vorzugsweise ist des weiteren eine optische Erfassungseinrichtung vorgesehen, um die Kontur und Lage des zu bearbeitenden Produkts vor der Bearbeitung zu erfassen. Derart kann vorzugsweise mit der zentralen Steuer und Regeleinrichtung die vorbestimmte Bahn der Wärmequelle auf der Grundlage der erfaßten Lage und Kontur des Werkstücks berechnet werden. Es ist jedoch nicht notwendig, hierzu eine zentrale Steuer- und Regeleinrichtung vorzusehen, die optische Erfassungseinrichtung kann vielmehr auch separat gesteuert und geregelt werden, wenn diese mit der Steuer- und Regeleinrichtung für die Wärmequellenleistung und Bahngeschwindigkeit der Wärmequelle entsprechend gekoppelt ist.

Die optische Erfassungseinrichtung ist vorzugsweise eine 2D-Laseroptik oder eine 3D-Laseroptik. Es kann jedoch auch jede andere optische Erfassungseinrichtung wie beispielsweise eine Lichtschranke, ein optischer Sensor, eine CCD-Kamera oder dergleichen verwendet werden, wenn vorgegebene bekannte Linien an dem Werkstück erfaßt werden. Derartige Linien können beispielsweise die obere und untere Randlinie 32, 34 des Bodens 30 oder der Öffnung 106 des Kelchs 10 des in Fig. 3 gezeigten Trinkglases 1 sein. In anderen Worten, durch Erfassen der Lage dieser bekannten Linien 32, 34 am Boden 30 oder an der Öffnung 106 des Kelchs 10 kann die Kontur und Lage des bekannten Glases 1 präzise erfaßt werden. Auf der Grundlage der erfaßten Kontur und Lage des Werkstücks kann dann die vorbestimmte Bahn der Wärmequelle zum Erzeugen der erhabenen bzw. eingezogenen Struktur 102, 104 berechnet werden.

Vorzugsweise wird die Wandstärke der Wandung 108 ebenfalls durch die optische Erfassungseinrichtung gemessen, weil die Wandstärke variieren kann. Wenn auf diese Weise vor dem Formen der erhabenen bzw. eingezogenen Struktur 102, 104 an der Wandung 108 die Wandstärke in dem zu bearbeitenden Bereich an der Wandung 108 des Werkstücks 10 ermittelt wird, kann die Wärmequellenleistung und die Bahngeschwindigkeit auf der Grundlage der gemessenen Wandstärke korrigiert werden, um die Präzision bei der Bearbeitung der Wandung 108 des Werkstücks 10 weiter zu erhöhen.

Alternativ oder zusätzlich wird der Umformgrad durch die optische Erfassungseinrichtung gemessen, wenn eine noch höhere Präzision erzielt werden soll. Durch Messen des Umformgrads kann die Bahngeschwindigkeit und Energieeinbringung bzw. Wärmequellenleistung entsprechend erhöht oder verringert werden, um einen vorgegebenen Sollwert der Verformung der Struktur zu erzielen.

Um des weiteren ein Fließen der erweichten Struktur durch zu langsames Abkühlen zu verhindern, wird vorzugsweise ein Abkühlvorgang durch Aufbringen eines Gasstroms auf die verformten Stellen beschleunigt. Derart kann die Präzision der Verformung weiter erhöht werden. Für den Gasstrom wird vorzugsweise Stickstoff verwendet, es kann jedoch auch jedes andere Inertgas oder Luft verwendet werden, um die Struktur entsprechend schnell abzukühlen.

Zum Aufbringen der Druckdifferenz im Inneren des Hohlraums 50 muß die Öffnung verschlossen werden. Dies erfolgt vorzugsweise durch eine Aluminiumwanne. Aluminium bietet den Vorteil einer guten Wärmeableitung, um eine Verformung wie beispielsweise eine Wellung der Wanne aufgrund der eingebrachten Wärme zu verhindern. Die Wanne wird vorzugsweise durch eine Dichtung 52 gegenüber der Wandung 108 abgedichtet, wobei die Dichtung beispielsweise Silikon aufweist. Dies bietet den Vorteil einer guten Abdichtung und gleichzeitig hoher Wärmebeständigkeit. Es kann jedoch auch jedes andere Dichtungsmaterial verwendet werden.

Das in Figur 3 gezeigte Trinkglas 1 hat einen Boden 30, einen Stiel 20 und einen Kelch 10. Dieses Trinkglas 1 wird durch bekanntes Formpressen und Blasen hergestellt und abgekühlt. Nachträglich werden erhabene und/oder eingezogene Strukturen 102, 104 an dem Kelch 10 durch das erfindungsgemäße Verfahren ausgebildet. Hierzu wird eine Öffnung 106 des Kelchs 10 beispielsweise mittels einer (nicht gezeigten) silikonbeschichteten Aluminiumplatte abgedichtet.

Die Erfindung ist nicht auf das Ausbilden von erhabenen und eingezogenen Strukturen an einer ebenen Platte bzw. an dem Kelch 10 eines Glases 1 beschränkt. Vielmehr können die Strukturen auch an jedem anderen Werkstück 10 ausgebildet werden, das eine Wandung 108 aufweist, die mittels eines Hohlkörpers 50 abdichtbar ist bzw. abgedichtet werden kann.

Durch das erfindungsgemäße Verfahren können beispielsweise Schriftzüge oder Logos und dergleichen an Werkstücken aus Glas, Kunststoff, Metall etc. mit sehr hoher Präzision angebracht werden. Es bietet vor allem den Vorteil einer sehr präzisen Gestaltung der Strukturen, die den Eindruck einer hohen Qualität erzeugen. Insbesondere bei hochwertigen Werkstücken und Produkten sowie Glasserien, wie sie für Weingläser, Sektkelche etc. verwendet werden, ist das hochwertige Aussehen von außerordentlicher Wichtigkeit.

### Bezugszeichenliste

- 1: Trinkglas
- 10: Werkstück
- 20: Stiel
- 30: Boden
- 32: obere Randlinie
- 34: untere Randlinie
- 50: Hohlkörper
- 52: Dichtung
- 54: Unter- bzw. Überdruckanschluß
- 60: Laservorrichtung
- 62: Laserstrahl
- 64: Rohlaserstrahl
- 102: erhabene Struktur
- 104: eingezogene Struktur
- 106: Öffnung
- 108: Wandung
- 108a: eine Seite
- 108b: andere Seite

## Patentansprüche

1. Verfahren zum Erzeugen von erhabenen (102) und/oder eingezogenen Strukturen (104) an Werkstücken (10) aus Glas, Blech oder Kunststoff mit den Schritten:
Aufbringen einer Druckdifferenz zwischen einer Seite (108a) einer Wandung (108) des Werkstücks (10) und einer anderen im wesentlichen dazu entgegengesetzten Seite (108b);
lokales Erwärmen der Wandung (108) des Werkstücks (10) auf eine Erweichungstemperatur des Werkstücks (10) mittels Laserstrahl (62) als Wärmequelle, um eine lokale Verformung der Wandung (108) des Werkstücks (10) zu verursachen; und
Abkühlen des Werkstücks (10);.
**dadurch gekennzeichnet, dass**
das Verfahren des weiteren folgende Schritte aufweist:
Anordnen eines Hohlkörpers (50) an der einen (108a) und/oder der anderen Seite (108b) des Werkstücks (10) und Abdichten des Hohlkörpers (50) daran und/oder Verschließen einer Öffnung eines Hohlkörpers des Werkstücks (10) mittels einer Platte;
Abfahren einer vorgegebenen oder vorgebbaren oder gewünschten Bahn mit dem Laserstrahl (62), um Linien, Erhebungen, Vertiefungen, Mulden und/oder Rillen wie gewünscht an der Wandung (108) des Werkstücks (10) auszubilden; und
Steuern eines Verformungsgrads durch Steuern der Druckdifferenz der einen Seite (108a) und der entgegengesetzten Seite (108b) der Wandung (108) des Werkstücks (10) und/oder Steuern der Erwärmungstemperatur des Werkstücks (10).

2. Verfahren nach Anspruch 1, wobei der Schritt des Abdichtens des Hohlkörpers (50) an dem Werkstück (10) mittels einer Dichtung (52) durchgeführt wird.

3. Verfahren nach Anspruch 1 oder 2, wobei der Laserstrahl (62) von einem CO₂-Laser (60) erzeugt wird.

4. Verfahren nach einem oder mehreren der vorherigen Ansprüche, des weiteren mit dem Schritt des Steuerns oder Regelns der Wärmequellenleistung und/oder der Bahngeschwindigkeit der Wärmequelle.

5. Verfahren nach einem oder mehreren der vorherigen Ansprüche, des weiteren mit dem Schritt des Erfassens der Lage und/oder Kontur des Werkstücks (10) mittels einer optischen Erfassungseinrichtung und Berechnen der vorbestimmten Bahn der Wärmequelle auf der Grundlage der erfaßten Lage und/oder Kontur des Werkstücks (10).

6. Verfahren nach einem oder mehreren der vorherigen Ansprüche, des weiteren mit dem Schritt des kontinuierlichen Messens der Wandstärke der Wandung (108) und Korrigieren der Bahngeschwindigkeit und/oder Wärmequellenleistung auf der Grundlage der gemessenen Wandstärke.

7. Verfahren nach einem oder mehreren der vorherigen Ansprüche, des weiteren mit dem Schritt des kontinuierlichen Messens eines Umformgrads des Werkstücks (10) und/oder Korrigieren der Bahngeschwindigkeit und Wärmequellenleistung auf der Grundlage des gemessenen Umformgrads.

8. Verfahren nach einem oder mehreren der vorherigen Ansprüche, wobei der Schritt des Abkühlens mittels Aufbringen eines Gasstroms auf das Werkstück (10) durchgeführt wird.

9. Verfahren nach einem oder mehreren der vorherigen Ansprüche, wobei das Werkstück (10) einen Hohlkörper wie beispielsweise einen Kelch eines Trinkglases (1) umfaßt, des weiteren mit dem Schritt des Verschließens einer Öffnung des Hohlkörpers mittels einer silikonbeschichteten Aluminiumplatte.

10. Vorrichtung zum Durchführen eines Verfahrens nach einem oder mehreren der vorherigen Ansprüche mit:
einer Druckdifferenzerzeugungseinrichtung; und
einem Laser (60) zum Erzeugen eines Laserstrahls (62) als Wärmequelle;
**gekennzeichnet durch**
einen Hohlkörper (50) oder eine Platte zum Erzeugen eines geschlossenen Hohlraums an dem Werkstück (10);
eine Bewegungseinrichtung zum Bewegen des Lasers (60) entlang einer Oberfläche des Hohlkörpers (10); und
eine Steuereinrichtung zum Steuern eines Verformungsgrads **durch** Steuern der Druckdifferenz der einen Seite (108a) und der entgegengesetzten Seite (108b) der Wandung (108) des Werkstücks (10) und/oder Steuern der Erwärmungstemperatur des Werkstücks (10).

11. Vorrichtung nach Anspruch 10, wobei der Laser (60) ein CO₂-Laser ist.

12. Vorrichtung nach Anspruch 10 oder 11, des weiteren mit einer Steuer- und Regeleinrichtung zum Steuern oder Regeln der Wärmequellenleistung und/oder der Bahngeschwindigkeit der Wärmequelle.

13. Vorrichtung nach einem oder mehreren der vorherigen Ansprüche 10 bis 12, des weiteren mit einer optischen Erfassungseinrichtung zum Erfassen der Lage und/oder Kontur des Werkstücks (10) und einer Berechnungseinrichtung zum Berechnen der vorbestimmten Bahn der Wärmequelle auf der Grundlage der erfaßten Lage und/oder Kontur des Werkstücks (10).

14. Vorrichtung nach einem oder mehreren der vorherigen Ansprüche 10 bis 13, des weiteren mit einer Meßeinrichtung zum kontinuierlichen Messen der Wandstärke der Wandung (108) und/oder eines Umformgrads des Werkstücks (10) und einer Korrektureinrichtung zum Korrigieren der Bahngeschwindigkeit und/oder der Wärmequellenleistung auf der Grundlage der gemessenen Wandstärke bzw. des gemessenen Umformgrads.

15. Vorrichtung nach einem oder mehreren der vorherigen Ansprüche 10 bis 14, des weiteren mit einer Gaszufuhreinrichtung zum Abkühlen des Werkstücks (10) mittels Aufbringen eines Gasstroms.

## Claims

1. A method for the generation of raised (102) and/or recessed structures (104) on workpieces (10) of glass, sheet metal, or plastics, comprising the steps of:
applying a pressure difference between one side (108a) of a wall (108) of the workpiece (10) and another side (108b) substantially opposite thereto;
locally heating the wall (108) of the workpiece (10) to a softening temperature of the workpiece (10) by means of a laser beam (62) as a heat source in order to induce local deformation of the wall (108) of the workpiece (10); and
cooling of the workpiece (10);
**characterized in that**
the method further comprises the following steps:
disposing a hollow body (50) on the one (108a) and/or the other side (108b) of the workpiece (10) and sealing the hollow body (50) thereon and/or closing an opening of a hollow body of the workpiece (10) by means of a plate;
traversing a predetermined or predeterminable or desired path with the laser beam (62) in order to form lines, projections, recesses, depressions and/or grooves on the wall (108) of the workpiece (10) as desired; and
controlling a deformation degree by controlling the pressure difference of the one side (108a) and the opposite side (108b) of the wall (108) of the workpiece (10) and/or controlling the heating temperature of the workpiece (10).

2. The method according to claim 1, wherein the step of sealing the hollow body (50) on the workpiece (10) is performed by means of a seal (52).

3. The method according to claim 1 or 2, wherein the laser beam (62) is generated by a CO₂ laser (60).

4. The method according to one or more of the preceding claims, further comprising the step of controlling or regulating the heat source capacity and/or the travel speed of the heat source.

5. The method according to one or more of the preceding claims, further comprising the step of acquiring the position and/or contour of the workpiece (10) by means of an optical acquisition unit and calculating the predetermined path of the heat source on the basis of the acquired position and/or contour of the workpiece (10).

6. The method according to one or more of the preceding claims, further comprising the step of continuously measuring the wall thickness of the wall (108) and correcting the travel speed and/or heat source capacity on the basis of the measured wall thickness.

7. The method according to one or more of the preceding claims, further comprising the step of continuously measuring a degree of reshaping of the workpiece (10) and/or correcting the travel speed and heat source capacity on the basis of the measured degree of reshaping.

8. The method according to one or more of the preceding claims, wherein the step of cooling is performed by applying a gas stream onto the workpiece (10).

9. The method according to one or more of the preceding claims, wherein the workpiece (10) comprises a hollow body, such as a goblet of a drinking glass (1), further comprising the step of closing an opening of the hollow body by means of a silicone-coated aluminium plate.

10. An apparatus for performing a method according to one or more of the preceding claims, comprising:
a pressure difference generation device; and
a laser (60) for generating a laser beam (62) as a heat source;
**characterized by**
a hollow body (50) or a plate for producing a closed cavity on the workpiece (10);
a motive device for moving the laser (60) along a surface of the hollow body (10); and
a control device for controlling a deformation degree by controlling the pressure difference of the one side (108a) and the opposite side (108b) of the wall (108) of the workpiece (10) and/or controlling the heating temperature of the workpiece (10).

11. The apparatus according to claim 10, wherein the laser (60) is a CO₂ laser.

12. The apparatus according to claim 10 or 11, further comprising a control and regulation device for the control or regulation of the heat source capacity and/or the travel speed of the heat source.

13. The apparatus according to one or more of the preceding claims 10 to 12, further comprising an optical acquisition unit for acquiring the position and/or contour of the workpiece (10) and a calculating device for calculating the predetermined path of the heat source on the basis of the acquired position and/or contour of the workpiece (10).

14. The apparatus according to one or more of the preceding claims 10 to 13, further comprising a measurement device for continuously measuring the wall thickness of the wall (108) and/or a degree of reshaping of the workpiece (10) and a correction device for correcting the travel speed and/or the heat source capacity on the basis of the measured wall thickness or the measured degree of reshaping.

15. The apparatus according to one or more of the preceding claims 10 to 14, further comprising a gas supply device for cooling the workpiece (10) by applying a gas stream.

## Revendications

1. Procédé pour la réalisation de structures en saillie (102) et/ou en renfoncement (104) sur des pièces (10) en verre, en tôle métallique ou en matière plastique, comportant les étapes suivantes :
application d'une différence de pression entre un côté (108a) d'une paroi (108) de la pièce (10) et un autre côté (108b) essentiellement opposé à ce dernier;
réchauffement local de la paroi (108) de la pièce (10) à une température de ramollissement de la pièce (10) à l'aide d'un dispositif laser (62) comme source de chaleur, afin de générer une déformation locale de la paroi (108) de la pièce (10); et
refroidissement de la pièce (10) ;
**caractérisé en ce que** le procédé comprend par ailleurs les étapes suivantes :
agencement d'un corps creux (50) d'un côté (108a) et/ou de l'autre côté (108b) de la pièce (10) et étanchement du corps creux(50) sur ladite pièce et/ou obturation d'une ouverture du corps creux de la pièce (10) à l'aide d'une plaque ;
parcours d'une trajectoire prédéfinie ou prédéfinissable ou souhaitée avec le faisceau laser (62) afin de former des lignes, bosses, creux, gouttières et/ou rainures comme souhaité sur la paroi (108) de la pièce (10) ; et
réglage du taux de déformation moyennant réglage de la différence de pression sur un côté (108a) et sur le côté opposé (108b) de la paroi (108) de la pièce (10) et/ou réglage de la température de chauffe de la pièce (10).

2. Procédé selon la revendication 1, dans lequel l'étanchement du corps creux (50) sur la pièce (10) est pratiqué à l'aide d'un joint (52).

3. Procédé selon la revendication 1 ou 2, dans lequel le faisceau laser (62) est généré par un laser au CO₂ (60).

4. Procédé selon une ou plusieurs des revendications précédentes, comportant en outre une étape de pilotage ou de réglage de la puissance de la source de chaleur et/ou de la vitesse de déplacement de la source de chaleur sur la trajectoire.

5. Procédé selon une ou plusieurs des revendications précédentes, comportant en outre une étape de détection de la position et/ou des contours de la pièce (10) à l'aide d'un dispositif de détection optique et calcul de la trajectoire prédéterminée de la source de chaleur sur la base de la position et/ou des contours détectés de la pièce (10).

6. Procédé selon une ou plusieurs des revendications précédentes, comportant en outre une étape de mesure continue de l'épaisseur de la paroi (108) et la correction de la vitesse sur la trajectoire et/ou de la puissance de la source de chaleur sur la base de l'épaisseur de la paroi mesurée.

7. Procédé selon une ou plusieurs des revendications précédentes, comportant en outre une étape de mesure permanente du taux de déformation de la pièce (10) et/ou la correction de la vitesse sur la trajectoire et de la puissance de la source de chaleur sur la base du taux de déformation mesuré.

8. Procédé selon l'une ou plusieurs des revendications précédentes, dans lequel l'étape du refroidissement est effectuée par l'application d'un flux de gaz sur la pièce (10).

9. Procédé selon l'une ou plusieurs des revendications précédentes, dans lequel la pièce (10) comprend un corps creux, par exemple un calice de verre pour boissons(1), comportant en outre une étape d'obturation d'une ouverture du corps creux à l'aide d'une plaque d'aluminium recouverte de silicone.

10. Dispositif pour la mise en oeuvre du procédé selon une ou plusieurs des revendications précédentes comportant:
un dispositif de production d'une différence de pression et
un dispositif laser (60) pour générer un faisceau laser (62) comme source de chaleur,
**caractérisé par**
un corps creux (50) ou une plaque destinée à former un espace creux fermé sur la pièce (10);
un dispositif de mouvement pour déplacer le dispositif laser (60) le long d'une surface du corps creux (10); et
un dispositif de réglage pour piloter le taux de déformation par le biais du réglage de la différence de pression entre un côté (108a) et le côté opposé (108b) de la paroi (108) de la pièce (10) et/ou le réglage de la température de chauffage de la pièce (10).

11. Dispositif selon la revendication 10, dans lequel le dispositif laser (60) est un laser au CO₂.

12. Dispositif selon la revendication 10 ou 11, comportant en outre un dispositif de pilotage et de réglage de la puissance de la source de chaleur et/ou de la vitesse de la source de chaleur sur la trajectoire.

13. Dispositif selon une ou plusieurs des revendications précédentes 10 à 12, comportant en outre un dispositif de détection optique pour détecter la position et/ou les contours de la pièce (10) et un dispositif de calcul de la trajectoire prédéterminée de la source de chaleur sur la base de la position et/ou des contours détectés de la pièce (10).

14. Dispositif selon une ou plusieurs des revendications précédentes 10 à 13, comportant en outre un dispositif de mesure pour la mesure en permanence de l'épaisseur de la paroi (108) et/ou du taux de déformation de la pièce (10), et un dispositif de correction destiné à corriger la vitesse sur la trajectoire et/ou la puissance de la source de chaleur sur la base de l'épaisseur mesurée ou du taux de déformation mesuré.

15. Dispositif selon une ou plusieurs des revendications précédentes 10 à 14, comportant en outre un dispositif d'approvisionnement en gaz pour refroidir la pièce (10) par application d'un flux de gaz.
